# NEW EUROPEAN PATENT SPECIFICATION

(11) **EP 0 696 342 B2**
(45) Date of publication and mention of the opposition decision: **02.05.2001**
(45) Mention of the grant of the patent: 29.01.1997
(21) Application number: 94915701.0
(22) Date of filing: 25.04.1994
(51) Int. Cl.: F16L 37/084

(54) **QUICK-ACTION COUPLING FOR PIPES OR HOSES**
SCHNELLKUPPLUNG FÜR ROHRE ODER SCHLÄUCHE
RACCORD A ACCOUPLEMENT RAPIDE POUR TUYAUX OU TUYAUX FLEXIBLES

(30) Priority: 29.04.1993 NL 9300734
(43) Date of publication of application: 14.02.1996
(73) Proprietor: WAVIN B.V., 8011 CW Zwolle (NL)
(72) Inventor: VAN DIJK, Berend Jan, NL-7776 XA Slagharen (NL); LODDER, Bernhard, NL-7772 EW Hardenberg (NL); VAN DONGEREN, Jan Peter, NL-7691 AR Bergentheim (NL)
(74) Representative: Iemenschot, Johannes Andreas, Ir.
(86) International application number: NL9400087
(87) International publication number: WO9425786

(56) References cited:
- EP-A- 0 333 937
- WO-A-91/07617
- WO-A-91/07618
- DE-A- 3 525 502
- DE-A- 3 612 689
- DE-C- 2 501 823
- ES-U- 9 000 586
- GB-A- 1 486 671
- GB-A- 1 520 150
- GB-A- 1 551 628
- GB-A- 1 556 008
- GB-A- 2 071 798
- GB-A- 2 155 576
- GB-A- 2 164 112
- GB-A- 2 245 945
- GB-A- 2 249 367

## Description

The present invention relates to a quick-action coupling for pipes or hoses according to the preamble of claim 1.

Such a quick-action coupling is known from Spanish Utility Model No. 9000586. In this known quick-action coupling the retaining ring is disposed in a close-fitting manner in the socket, a radial shoulder of the retaining ring resting against the end face of the socket. The retaining ring is held in position by the metal sleeve which engages with one end around the retaining ring and has, at its other end, a plurality of notches which define crenellations which are bent inwards around the radial shoulder of the socket in the transition area between the first and second socket part.

A quick-action coupling is known from British Patent No. 2,071,798. In the case of this known quick-action coupling the retaining ring has a J-shaped crosssection in the radial direction. The long part of the ring (long leg of the J) is threaded on the inside and screwed onto the outside of the also threaded socket part, while the short part of the retaining ring (short leg of the J) projects into the second socket part and in fact serves as a retaining ring.

The known quick-action coupling has a number of disadvantages. Due to the fact that the retaining ring is screwed onto the outside of the socket, the diameter of the second socket part with the retaining ring screwed onto it is relatively great compared with the first socket part. Moreover, the retaining ring can be unscrewed from the socket relatively easily, which can have serious consequences in a situation in which high temperature and pressure prevail inside the coupling. Finally, in order to prevent the plastic socket from deforming under the influence of high temperature and pressure and the retaining ring from coming off the socket, or the socket creeping at higher temperatures at the position of the sealing ring, thus allowing leakage, the wall thickness of the socket and the retaining ring must be relatively great, with the result that the coupling becomes heavy, or the socket and the retaining ring have to be made of a highgrade plastic, thereby making the coupling relatively expensive.

The object of the invention is to provide an improved quick-action coupling.

This object is achieved by a quick-action coupling having the features listed in claim 1 or claim 2.

The quick-action coupling according to the invention can be made from a conventional plastic (for example, polyethene or polybutene) and can still be made relatively slim, since the plastic parts of the coupling are enclosed in the metal reinforcing sleeve, with the result that the coupling can undergo little or no deformation in the axial and radial direction under the influence of high temperature and pressure.

Due to the fact that the ribs engage in complementary grooves of the second socket part, as claimed in claim 1, the retaining ring can be positioned well during the fitting.

With a quick action coupling as claimed in claim 2 the extension piece supports the inserted pipe or hose end when it is being bent so that stress concentrations in the pipe or hose and prevented.

Preferred embodiments of the quick-action coupling according to the invention are described in the subclaims.

The invention will be explained in greater detail in the description which follows of a number of possible embodiments of a quick-action coupling according to the invention with reference to the appended drawing, in which:
Fig. 1 is a longitudinal section of a quick-action coupling according to the invention, in the form of a right-angled bend;
Fig. 2 is a longitudinal section of a quick-action coupling according to the invention, in the form of a socket to be screwed onto a pipe end;
Fig. 3 is a longitudinal section of a quick-action coupling of the type shown in Fig. 2, with a modified embodiment of the retaining ring; and
Figs. 4 and 5 show two possible embodiments of a locking ring of a quick-action coupling according to the invention.

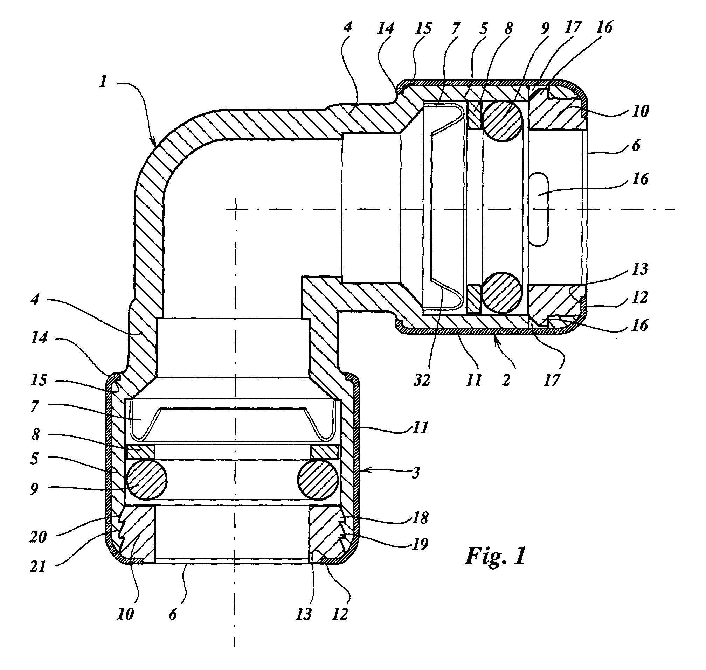

The quick-action coupling according to the invention shown in Fig. 1, in the form of a right-angled bend, comprises a plastic housing 1 with two sockets 2 and 3. Each socket comprises a first socket part 4 for the essentially close-fitting accommodation of an end (not shown) of a pipe or hose and a second socket part 5 connecting to the first socket part 4 and with a larger internal diameter than the first socket part 4. Viewed from the first socket part towards the insertion end 6 of the socket, the second socket part contains in succession a locking ring 7, a spacer ring 8, and a sealing ring 9. The locking ring 7 is shown only diagrammatically here. The rings 7, 8 and 9 are held in place by a retaining ring 10 fitted at the insertion end 6 of the socket.

The retaining ring 10 is situated inside the second socket part 5. A metal reinforcing sleeve 11 is disposed on the outside of the second socket part 5. This reinforcing sleeve 11, which can be made of, for example, aluminium, is flanged inwards at its one end 12 near the insertion end 6, thereby engaging around the retaining ring 10, and behind the end face 13 of the retaining ring 10 extending essentially in the radial direction. At its other end 14, the reinforcing ring 11 is also flanged inwards and thereby engages behind a radial shoulder 15 of the socket 2, 3 lying in the transition area between the first socket part 4 and the second socket part 5.

In Fig. 1 the retaining rings 10 in the two sockets 2 and 3 are designed differently. Socket 2 is not designed according to claim 1.

The retaining ring 10 in the socket 3 is provided on the outside with two ribs 18, 19, running over the entire periphery and engaging in complementary grooves 20, 21 on the inside of the second socket part 5.

Due to the fact that the ribs 18, 19 engage in the grooves 20, 21 of the second socket part 5, the retaining ring 10 can be positioned well during the fitting.

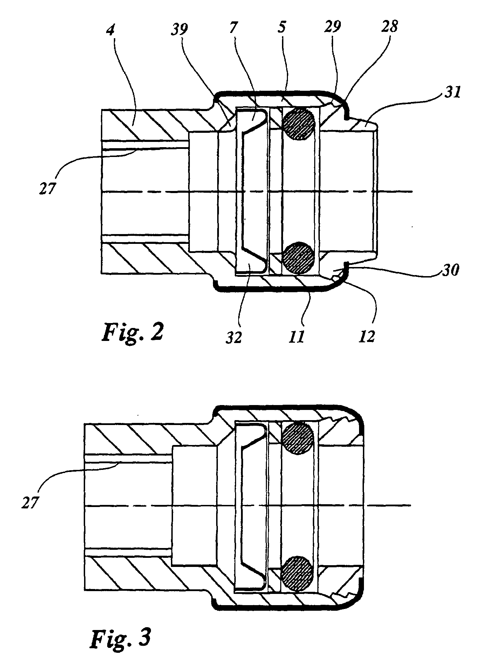

Figs. 2 and 3 show quick-action couplings according to the invention of the type which can be screwed onto a pipe end (not shown here) by means of screw thread 27. These couplings have only one socket. The retaining ring 28 of the quick-action coupling of Fig. 3 is provided on the outer periphery with a peripheral rib 29, which engages in a complementary groove on the inside of the second socket part 5, and an essentially radial shoulder 30 behind which the inward flanged end 12 of the reinforcing sleeve 11 engages. The retaining ring 28 is also provided with a preferably flexible extension piece 31 extending in the axial direction from the radial shoulder 30, which piece supports the inserted pipe or hose end when it is being bent, so that stress concentrations in the pipe or hose are prevented.

The design of the socket of the quick-action coupling shown in Fig. 3 corresponds entirely to the design of the socket 3 of the quick-action coupling shown in Fig. 1.

In the case of all embodiments of the quick-action coupling according to the invention, the intemal diameter of the retaining ring 10, 28 is essentially the same as the internal diameter of the first socket part 4. The inside of the retaining ring serves as a guide for a pipe or hose end to be inserted.

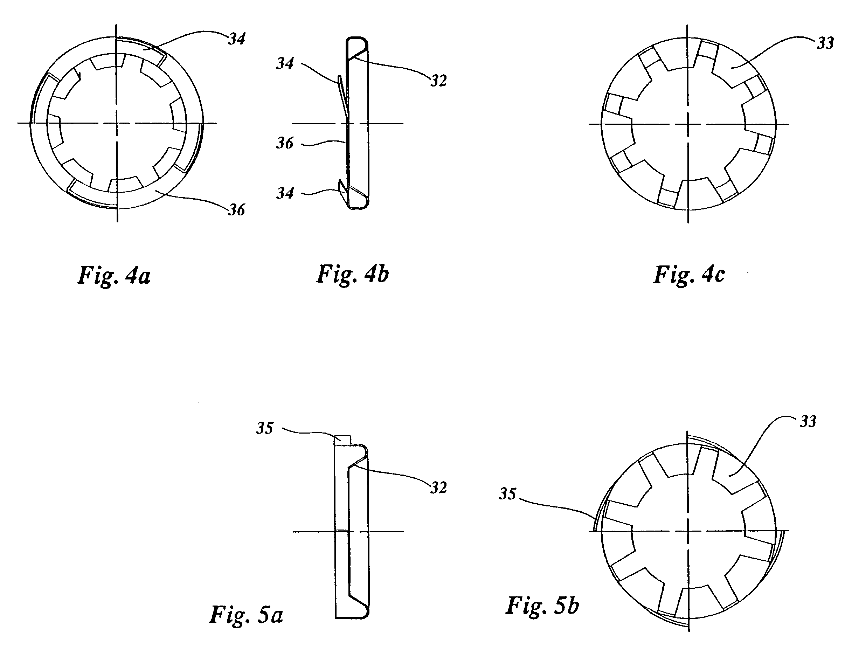

Figures 4 and 5 show two possible embodiments of the locking ring 7 of the quick-action coupling according to the invention.

The inward slanting part 32 of the locking rings 7 consists of a number of lips or teeth 33 which are slightly flexible. These lips or teeth 33 are bent outwards slightly during the insertion of a pipe or hose end. During withdrawal of the pipe or hose end, the lips or teeth 33 engage in the outside wall of the pipe or hose and thereby ensure that the pipe or hose cannot be pulled out any further. In order to make it still possible for the inserted pipe or hose end to be removed from the coupling again, the teeth or lips 33 are made saw-toothed in the known manner, so that they form a sort of "screw thread" on engagement in the pipe or hose. The inserted pipe or hose can be "screwed" out of the coupling by turning the inserted pipe or hose.

In order to prevent the locking ring 7 from turning with the inserted pipe or hose end while it is being unscrewed, the locking ring 7 can be provided with a number of flexible lips, running in the same tangential direction and, depending on the type of locking ring, projecting axially or radially at an angle from the external surface of the locking ring. These flexible lips are indicated by 34 in Fig. 4 and by 35 in Fig. 5.

In the case of the locking ring 7 shown in Fig. 4, the flexible lips 34 are disposed on the end face 36 of the locking ring 7 facing the first socket part 5. In the embodiment of the locking ring 7 shown in Fig. 5, the flexible lips 35 are disposed on the outer periphery of the locking ring 7. The free end of a flexible lip 34, 35 can knock against a projection disposed in the second socket part 5 when an inserted pipe or hose end is being unscrewed from a socket, with the result that further turning of the locking ring is prevented. Such a projection is indicated by 39 in Fig. 2. If there is a projection 39, the locking ring 7 must be of the type shown in Fig. 4. When a locking ring 7 of the type shown in Fig. 5 is used, the projection must be disposed at the position of the locking ring on the inside wall of the second socket part 5.

A locking ring 7 of the type shown here, having flexible lips 34, 35 disposed on the outside, can be used not only in the quick-action coupling according to the invention described above, but also in other types of quick-action couplings in which a locking ring is provided.

For manufacturing reasons, the locking ring may be made up of several coaxial partial rings.

The invention is not limited to the embodiments of the quick-action coupling according to the invention described above and shown in the drawing. Other embodiments are possible within the scope of the invention. The locking ring can be in a different form.

## Claims

1. Quick-action coupling for pipes or hoses, comprising a housing (1), having at least one socket (2, 3; 22, 23) with a first socket part (4) lying at a distance from the insertion end of the socket, for the essentially closefitting accommodation of one end of a pipe or hose, a second socket part (5) connecting thereto and having a greater internal diameter than the first socket part, which second socket part, viewed from the first socket part towards the insertion end of the socket, contains in succession a locking ring (7), a spacer ring (8), and a sealing ring (9), which rings are held in position by a retaining ring (10; 28) which is disposed at the insertion end of the socket, essentially inside the second socket part (5), and is connected to the housing, a metal reinforcing sleeve (11) being disposed around the outside of the second socket part, which reinforcing sleeve (11) is flanged inwards at its one end (12) near the insertion end of the socket thereby engaging around the retaining ring (10), and is flanged inwards at its other end (14) thereby engaging behind an essentially radial shoulder (15) of the socket lying in the transition area between the first (4) and second socket part (5), **characterized in that** the housing (1) is made from plastic, and the retaining ring (10) is provided on the outside with ribs (18, 19) running in the peripheral direction and engaging in complementary grooves (20, 21) on the inside of the second socket part (5).

2. Quick-action coupling for pipes or hoses, comprising a housing (1), having at least one socket (2, 3; 22, 23) with a first socket part (4) lying at a distance from the insertion end of the socket, for the essentially close-fitting accommodation of one end of a pipe or hose, a second socket part (5) connecting thereto and having a greater internal diameter than the first socket part, which second socket part, viewed from the first socket part towards the insertion end of the socket, contains in succession a locking ring (7), a spacer ring (8), and a sealing ring (9), which rings are held in position by a retaining ring (28) which is disposed at the insertion end of the socket, essentially inside the second socket part (5), and is connected to the housing, a metal reinforcing sleeve (11) being disposed around the outside of the second socket part, which reinforcing sleeve (11) is flanged inwards at its one end (12) near the insertion end of the socket, thereby engaging behind an essentially radial shoulder (30) on the outer periphery of the retaining ring (28), and is flanged inwards at its other end (14) thereby engaging behind an essentially radial shoulder (15) of the socket lying in the transition area between the first (4) and second socket part (5), characterized in that the housing (1) is made from plastic, and the retaining ring (28) is provided with an extension piece (31) extending axially from the radial shoulder (30).

3. Quick-action coupling according to claim 1 or 2, **characterized in that** the reinforcing sleeve (11) is made of aluminium.

4. Quick-action coupling according to one or more of claims 1 - 3, **characterized in that** the locking ring (7) is provided with a number of flexible lips (34;35), running in the same tangential direction and projecting axially or radially at an angle from the extemal surface of the locking ring, the free end of which lips can butt against a projection (39) disposed at the position of the locking ring in the second socket part (5).

5. Quick-action coupling according to claim 4, **characterized in that** the flexible lips (35) are disposed on the outer periphery of the locking ring (7).

6. Quick-action coupling according to claim 4, **characterized in that** the flexible lips (34) are disposed on an end face (36) of the locking ring (7) facing the first socket part (4).

7. Quick-action coupling according to one of claims 4 - 6, **characterized in that** the locking ring (7) is made up of several coaxial partial rings.

## Patentansprüche

1. Schnellkupplung für Rohre oder Schläuche, bestehend aus einem Gehäuse (1) mit zumindest einer Muffe (2,3;22,23) mit einem ersten Muffenteil (4) in einem Abstand vom Einsteckende der Muffe für die im wesentlichen festsitzende Aufnahme eines Endes eines Rohres oder Schlauches, einem zweiten Muffenteil (5), der an diesen anschließt und einen größeren Innendurchmesser als der erste Muffenteil hat, welcher zweite Muffenteil, gesehen vom ersten Muffenteil zum Einsteckende der Muffe hin, in Aufeinanderfolge einen Sicherungsring (7), einen Distanzring (8) und einen Dichtungsring (9) enthält, welche Ringe durch einen Haltering (10;28) in Position gehalten sind, der am Einsteckende der Muffe im wesentlichen im Inneren des zweiten Muffenteils (5) angeordnet und mit dem Gehäuse verbunden ist, wobei eine Metallverstärkungshülse (11) um die Außenseite des zweiten Muffenteils herum angeordnet ist, welche Verstärkungshülse (11) an ihrem einen Ende (12) nahe dem Einsteckende der Muffe nach innen abgewinkelt ist und dadurch mit dem Haltering (10) rundum in Eingriff steht, und an ihrem anderen Ende (14) nach innen abgewinkelt ist und dadurch eine im wesentlichen radiale Schulter (15) der Muffe hintergreift, die im Übergangsbereich zwischen dem ersten (4) und dem zweiten Muffenteil (5) liegt, dadurch gekennzeichnet, daß das Gehäuse (1) von Kunststoff gebildet und der Haltering (10) an seiner Außenseite mit Rippen (18,19) versehen ist, die in Umfangsrichtung verlaufen und in Komplementärnuten (20,21) an der Innenseite des zweiten Muffenteils (5) eingreifen.

2. Schnellkupplung für Rohre oder Schläuche, bestehend aus einem Gehäuse (1) mit zumindest einer Muffe (2,3;22,23) mit einem ersten Muffenteil (4) in einem Abstand vom Einsteckende der Muffe für die im wesentlichen festsitzende Aufnahme eines Endes eines Rohres oder Schlauches, einem zweiten Muffenteil (5), der an diesen anschließt und einen größeren Innendurchmesser als der erste Muffenteil hat, welcher zweite Muffenteil, gesehen vom ersten Muffenteil zum Einsteckende der Muffe hin, in Aufeinanderfolge einen Sicherungsring (7), einen Distanzring (8) und einen Dichtungsring (9) enthält, welche Ringe durch einen Haltering (28) in Position gehalten sind, der am Einsteckende der Muffe im wesentlichen im Inneren des zweiten Muffenteils (5) angeordnet und mit dem Gehäuse verbunden ist, wobei eine Metallverstärkungshülse (11) um die Außenseite des zweiten Muffenteils herum angeordnet ist, welche Verstärkungshülse (11) an ihrem einen Ende (12) nahe dem Einsteckende der Muffe nach innen abgewinkelt ist und dadurch eine im wesentlichen radiale Schulter (30) am Außenumfang des Halterings (28) hintergreift, und an ihrem anderen Ende (14) nach innen abgewinkelt ist und dadurch eine im wesentlichen radiale Schulter (15) der Muffe hintergreift, die im Übergangsbereich zwischen dem ersten (4) und dem zweiten Muffenteil (5) liegt, dadurch gekennzeichnet, daß das Gehäuse (1) von Kunststoff gebildet und der Haltering (28) mit einem Verlängerungsstück (31) versehen ist, das sich in axialer Richtung von der radialen Schulter (30) erstreckt.

3. Schnellkupplung nach Anspruch 1 oder 2, dadurch gekennzeichnet, daß die Verstärkungshülse (11) von Aluminium gebildet ist.

4. Schnellkupplung nach einem oder mehreren der Ansprüche 1 bis 3, dadurch gekennzeichnet, daß der Sicherungsring (7) mit einer Anzahl flexibler Lippen (34;35) versehen ist, die in der gleichen tangentialen Richtung verlaufen und axial oder radial mit einem Winkel von der Außenfläche des Sicherungsringes abstehen, wobei das freie Ende der Lippen gegen einen Vorsprung (39) an der Position des Sicherungsringes im zweiten Muffenteil (5) anstoßen kann.

5. Schnellkupplung nach Anspruch 4, dadurch gekennzeichnet, daß die flexiblen Lippen (35) am Außenumfang des Sicherungsringes (7) angeordnet sind.

6. Schnellkupplung nach Anspruch 4, dadurch gekennzeichnet, daß die flexiblen Lippen (34) an einem freien Ende (36) des Sicherungsringes (7) angeordnet sind, das dem ersten Muffenteil (4) zugewandt ist.

7. Schnellkupplung nach einem der Ansprüche 4 bis 6, dadurch gekennzeichnet, daß der Sicherungsring (7) aus mehreren koaxialen Teilringen zusammengesetzt ist.

## Revendications

1. Raccord rapide pour tuyaux ou flexibles, comprenant une enveloppe (1), ayant au moins un manchon (2, 3 ; 22, 23) avec une première partie de manchon (4) située à une certaine distance de l'extrémité d'insertion du manchon, pour recevoir à ajustement étroit une extrémité d'un tuyau ou d'un flexible, une deuxième partie de manchon (5), s'y raccordant et ayant un plus grand diamètre extérieur que la première partie de manchon, laquelle deuxième partie de manchon comporte successivement, si on la regarde depuis la première partie de manchon en direction de l'extrémité d'insertion du manchon, un anneau de verrouillage (7), un anneau d'écartement (8) et un anneau d'étanchéité (9), ces anneaux étant maintenus en position par un anneau de retenue (10 ; 28), qui est placé au niveau de l'extrémité d'insertion du manchon, essentiellement à l'intérieur de la deuxième partie de manchon (5), et qui est relié à l'enveloppe, une gaine métallique de renforcement (11) étant disposée sur tout l'extérieur de la deuxième partie de manchon, laquelle gaine de renforcement (11) est rabattue vers l'intérieur au niveau de son extrémité (12) proche de l'extrémité d'insertion du manchon pour ainsi venir s'appliquer autour de l'anneau de retenue (10), et est également rabattue vers l'intérieur au niveau de son autre extrémité (14) pour ainsi venir s'appliquer derrière un épaulement (15) essentiellement radial du manchon, situé dans la zone de transition entre la première (4) et la deuxième (5) parties du manchon, **caractérisé** en ce que l'enveloppe (1) est en matière plastique et l'anneau de retenue (10) est pourvu, sur l'extérieur, de nervures (18, 19) s'étendant dans la direction périphérique et pénétrant dans des rainures (20, 21) de forme complémentaire situées sur l'intérieur de la deuxième partie de manchon (5).

2. Raccord rapide pour tuyaux ou flexibles, comprenant une enveloppe (1), ayant au moins un manchon (2, 3 ; 22, 23) avec une première partie de manchon (4) située à une certaine distance de l'extrémité d'insertion du manchon, pour recevoir à ajustement étroit une extrémité d'un tuyau ou d'un flexible, une deuxième partie de manchon (5), s'y raccordant et ayant un plus grand diamètre extérieur que la première partie de manchon, laquelle deuxième partie de manchon comporte successivement, si on la regarde depuis la première partie de manchon en direction de l'extrémité d'insertion du manchon, un anneau de verrouillage (7), un anneau d'écartement (8) et un anneau d'étanchéité (9), ces anneaux étant maintenus en position par un anneau de retenue (28), qui est placé au niveau de l'extrémité d'insertion du manchon, essentiellement à l'intérieur de la deuxième partie de manchon (5), et qui est relié à l'enveloppe, une gaine métallique de renforcement (11) étant disposée sur tout l'extérieur de la deuxième partie de manchon, laquelle gaine de renforcement (11) est rabattue vers l'intérieur au niveau de son extrémité (12) proche de l'extrémité d'insertion du manchon pour ainsi venir s'appliquer derrière un épaulement (30) essentiellement radial sur la périphérie extérieure de l'anneau de retenue (28), et est également rabattue vers l'intérieur au niveau de son autre extrémité (14) pour ainsi venir s'appliquer derrière un épaulement (15) essentiellement radial du manchon, situé dans la zone de transition entre la première (4) et la deuxième (5) parties du manchon, caractérisé en ce que l'enveloppe (1) est en matière plastique et l'anneau de retenue (28) est pourvu d'une pièce de prolongement (31) qui s'étend axialement à partir de l'épaulement radial (30).

3. Raccord rapide selon la revendication 1 ou 2, **caractérisé** en ce que la gaine de renforcement (11) est faite en aluminium.

4. Raccord rapide selon une ou plusieurs des revendications 1 à 3, **caractérisé** en ce que l'anneau de verrouillage (7) est pourvu d'un certain nombre de becs souples (34 ; 35), qui s'étendent dans la même direction tangentielle et qui font saillie axialement ou radialement en formant un angle par rapport à la surface extérieure de l'anneau de verrouillage, l'extrémité libre de ces becs pouvant venir en butée contre une protubérance (39) située à l'emplacement de l'anneau de verrouillage dans la deuxième partie de manchon (5).

5. Raccord rapide selon la revendication 4, **caractérisé** en ce que les becs souples (35) sont disposés sur la périphérie extérieure de l'anneau de verrouillage (7).

6. Raccord rapide selon la revendication 4, **caractérisé** en ce que les becs souples (34) sont disposés sur une face d'extrémité (36) de l'anneau de verrouillage (7), en face de la première partie de manchon (4).

7. Raccord rapide selon l'une des revendications 4 à 6, **caractérisé** en ce que l'anneau de verrouillage (7) est constitué de plusieurs anneaux partiels coaxiaux.
